# EUROPEAN PATENT APPLICATION

(11) **EP 2 693 167 A2**
(43) Date of publication of application: **05.02.2014**
(21) Application number: 13003821.9
(22) Date of filing: 01.08.2013
(51) Int. Cl.: G01B 21/02, G01B 11/02

(54) **Optical device and method for measuring microscopic structures**

(30) Priority: 02.08.2012 DE 102012015186
(71) Applicant: Hahlweg, Cornelius, 22147 Hamburg (DE); Pescoller, Lukas, 39031 Bruneck (IT)
(72) Inventor: Hahlweg, Cornelius, 22147 Hamburg (DE); Pescoller, Lukas, 39031 Bruneck (IT)

(57) **Abstract**

Optical device and corresponding method for treasuring the dimensions of at least a three-dimensional object, which has a planar base expending in the x-z plane and the height extending in the y direction. The device comprises a supporting means, on which the object is positioned and which defines a surface in the x-z plane, at least an illuminating means for illuminating the object, a first inspection means comprising a first recording means for recording images of the object on a first sensor from an oblique direction at a prescribed angle of elevation with respect tc the plane of the supporting means. Finally, the device comprises a computing unit for collecting, processing and displaying the images of the object. In particular, the first inspection means comprises a first image reproducing optic for producing a geometrical distortion of the image, such that the resulting ratio height-to-width of the image is increased.

## Description

The present disclosure relates to an optical device and a corresponding method for measuring the dimensions of an object, in particular of a microscopic three-dimensional object.

The measurement of the dimensions of microscopic objects is an important issue in several fields of application. Different types of optical devices, such as for example the scanning or transmission electron microscope, are well known for this purpose. However, although they can be very precise and effective, in several cases they are complicated and expensive instruments and/or require high-specialized personnel to obtain reliable results. On the other hand, methcds employing the optical interference measurements as well as the triangulation process do not always need an expensive instrumentation. However, they often require elaborated calculations or turn out to be less precise, thereby leading to measurement errors.

From ITBZ20100024 A1, it is known a simple and effective way to measure the dimensions cf microscopic structures, such as rough surfaces (i.e. sandpaper) or grooved surfaces, without coming into contact with said structures. The structures are illuminated by means of at least a light source and a sequence of images of these illuminated structures is recorded by means of a camera positioned sideways relative to the plane supporting the structures, that is with an optical axis forming an acute angle, i.e. less than 90 degrees, with respect to said plane. The recorded images are analyzed and processed in overlapped positions in order to measure the dimensions of the structures. However, especially for structures having a vertical dimension that is one order of magnitude less than the base dimensions, the height measurement can result quite inaccurate. In fact, conventional recoding cameras, such as CCD or CMCS cameras, employ a sensor array representing the different pixels of the image in the vertical and horizontal directions in equivalent way. Therefore, by measuring structures where one dimension, e.g. the vertical one, is much smaller than the other dimensions, e.g. the base ones, the relative resolution for the vertical direction in terms of number of pixels relative to the object dimension, is much lower than that for the horizontal direction. Accordingly, an acceptable height measurement for such structures as well as a correction of the geometrical distortion due to the oblique viewing direction of the recording camera, is very difficult in this case.

Furthermore, in order to have a reliable measurement of the dimensions of a microscopic structure using recording cameras, it is always important that the points in the system taken as reference elements for the measurements be correctly focussed. However, in a system in which the recording means captures images from an oblique direction as explained above, the image sharpness in the direction of the recording means is not constant, thereby leading to depth of field problems.

It is therefore an object of the present invention to provide an optical device and a method for measuring the dimensions of a microscopic structure solving the above mentioned problems. In particular, to provide an optical device and a method which are simple and cost-effective and which assure a reliable measurement of all dimensions of the inspected structure. This object is achieved by the optical device according to claim 1 and the method according to claim 11. Further advantageous combinations and designs are given in the dependent claims therefrom.

In particular, an optical device is provided for measuring the dimensions of at least a three-dimensional object in a coordinate system XYZ, said object having a planar base extending in the x-z plane and the height extending in the y direction. The device comprises a supporting means, on which the object is positioned and which defines a surface in the x-z plane, at least an illuminating means for illuminating the object, and a first inspection means comprising a first recording means for recording images of the object on a first sensor from an oblique direction at a prescribed angle of elevation with respect to the plane of the supporting means. Finally, the device comprises a computing unit for collecting, processing and displaying the images of the object. According to the invention, the first inspection means comprises a first image reproducing optic for producing a geometrical distortion of the image, such that the resulting ratio height-to-width of the inage is increased.

The above described design is simple in its construction, yet effective. A sequence of recorded images of the inspected object with high contrast is first selected and then analyzed and processed in overlapped positions by the computing unit in order to compensate for distortions due to image projections. By means of an appropriate software program, the images underge a coordinate transformation, so that a natural perspective view of the object is realized. In particular, by employing an image reproducing optic able to modify the scale, i.e. the ratio, of the vertical dimension of the image relative tc the horizontal one, it is possible to reliably determine the dimensions of objects having a very small height with respect to the base dimensions. In fact, by virtue of this geometrical distortion, the vertical and the horizontal dimensions result to be comparable and the pixel resolution of the sensor of the recording means is utilized in a more efficient way such that an improved discretization in the vertical direction is achieved.

As stated above, this device is suitable for measuring the dimensions of one or several microscopic structures having a ratio height-to-width that is much less than one and, specifically, for structures wherein the dimension of the height is one order of magnitude less than the base dimensions. In particular, for a plurality of structures, these can all have the same or have different dimensions and can be uniformly or not uniformly distributed on a surface. Examples of such structures are the particles on a sand paper having an average diameter varying from tens to several hundreds of micrometers. The device can also be employed to measure the dimensions of the embossed dots of the Braille characters, which usually have a nominal height of 480 µm and a base diameter of 1400 µm. Preferably, this optical device is employed fcr measuring the dimensions of structures on printed material and in particular of printing plates and typographical characters. The structures can be applied on a surface and can be transparent, semi-transparent or opaque, such as for example rubber, elastomer, polyester or varnish. On the other hand, the structures can also be part of the surface, protruding from the same, as the result of a relief printing, punching or stapling on paper, cardboard or metal. Also, the material of the structures can have a specular reflectance (i.e. a direct reflex).

The supporting means can be made of the sane or different material of the structures and can be transparent, opaque or semitransparent.

The illuminating means can be any type of lamp such as bulb, LED or the like, preferably radiating in the visible range. In particular, the illuminating means can be a coherent or incoherent light source; it can be monochromatic or a white light with a wide or narrow width. According to the characteristics of the object to be inspected, the illuminating means can radiate light with a particular wavelength, a particular polarization and/or a particular wave front. The illuminating means is positioned relative to the object to be inspected in order to allow a reliable acquisition of the images from the recording means and to better emphasize specific parts of the object. In a three-dimensional coordinate system, the illuminating means can be positioned in any of the octants of the space relative to the object, taken as the origin of the system. In particular, the illuminating means preferably radiates in a direction of the space towards the object, thereby forming a predetermined angle of deviation o from the axis perpendicular to the object. The angle ϕ can be any angle between C and 90 degrees, preferably between 55 and 85 degrees and more preferably between 70 and 80 degrees. The position of the illuminating means can advantageously be modified based on the characteristics of the object (symmetry, colors, dimensions, etc...) and/or of the inspection means (optics, sensor). This can be performed manually by the user (directly acting on the illuminating means or by means of an input command via the computing unit) or automatically by the computing unit. For this purpose, the illuminating means can be attached to an adjustable element (e. g. an arm or the like) able to modify the location of the illuminating means in different positions in the space. The adjustment can occur continuously or at fixed points.

The inspection means is formed by different optical elements and is employed to inspect the illuminated object. Said means comprises in particular a recording means such as a camera for capturing images of the object and recording said images on a sensor as well as an image reproducing optic, coupled to the recording means, formed by lenses, optical filters and/or diaphragms for reproducing the image of the object on the sensor of the recording means.

The recording means can be a CCD or a CMOS camera with an optical axis forming a fixed angle of elevation θ with respect to the plane of the supporting means. This angle is usually selected based on the structural characteristics cf the object to be inspected, i.e. the presumed height and eventually the presumed distance from other objects. The angle θ can be any angle between 0 and 90 degrees, preferably between 5 and 35 degrees and more preferably between 10 and 20 degrees. Advantageously, as in the case of the illuminating means, the angle θ can be modified based on the characteristics of the object (form, dimensions, number of the objects and their arrangement, etc...). In particular, the angle θ should be rather acute such that the object side opposed to the inspection view is not visible and the area on the upper part of the object that is visible in a tangential way is very small. On the other hand, in case of a plurarity of objects to be inspected, the angle θ should not be too acute in order to avoid a possible cover of the object to be inspected from another object located forward in the line of vision. Accordingly, the angle of elevation θ must be selected based on the presumed height of the object and eventually the minimal distance between said objects.

The modification of the angle of elevation can be performed manually by the user (directly acting on the inspection means or by means of an input command via the computing unit) or automatically by the computing unit. For this purpose, the inspection means can be provided with an adjusting element able to modify the angle of elevation. The adjustment can occur continuously or at fixed points.

However, in order to simultaneously inspect the object from different viewpoints, a plurality of inspection means can be used and coupled to each other. For example, an inspection means located over the object, with an optical axis perpendicular to the supporting means, is useful for defecting flat surfaces of the object. Alternatively, dedicated mirrors can be used to simultaneously capture images from different viewpoints using a single inspection means.

In order to generate the above mentioned geometrical distortion of the image, the image reproducing optic comprises at least two lenses, wherein one of the lenses has two different focal distances. In this regard, one of the lenses can be a cylindrical lens to produce a cylindrical aberration.

In a preferred embodiment, the image reproducing optic comprises two cylindrical lenses having the corresponding optical axes in the vertical and horizontal direction crossing each other. In particular, the optical system formed by these two lenses is configured such that the plane of focus of the inspected object for both the directions has the sane image plane, whereas the dimension of the image in only one of the directions (e.g. the vertical direction) is considerably rcagnified. Alternatively, the geometrical distortion can be realized by the combination of a cylindrical and a spherical lens.

The oblique viewing direction of the inspection means and, in particular, of the recording means according to the optical arrangement of the present disclosure, results in an image distortion in the viewing direction. Therefore, only a restricted and narrow region of the inspected object can be rendered sharply, i.e. along the line where the object intersects the plane of focus. In order to solve this problem, it is known to apply the so called Scheimpflug principle. According to this principle, if in an optical system the object plane, the lens plane, and the image plane are not parallel to one other, a sharp focus of the object can be provided by orienting these planes such that they meet at a single point in the space. That means, in the present case, that the plane defined by the sensor of the recording means and eventually the plane defined by the lens positioned between the sensor and the inspected object are inclined around the horizontal axis. However, due to the fact that the optical device according to the present invention utilizes an image reproducing optic producing a particular geometrical distortion of the image, i.e. a cylindrical aberration, the Scheimpflug principle cannot be correctly applied for this optical system. In fact, new degrees of freedom are introduced and an overlapping of two different distortion effects occurs.

In order to reduce the problem of depth of focus in an alternative way, it is possible however to regulate the apertures of the optical system, thereby controlling the cone angle of the bundle of rays that come to a focus in the image plane (i.e. sensor plane). The smaller the aperture, the greater the depth of focus.

In a further preferred embodiment, the first image reproducing optic comprises at least two different slit diaphragms for each of the two focal distances of the lenses. In this way, the different relative apertures, i.e. the different f-numbers, of the image plane in the vertical and horizontal direction are compensated. It has been proved that the plane with the greater image magnification (i.e. the vertical direction) needs a smaller aperture. Consequently, different diaphragms are set for the image planes in the two directions. In particular, the two slit diaphragms are set in two different places cf the optical system relative to the focal distance of the corresponding lens. In one embodiment, the slit diaphragms are located within the focal distances of the lenses in order to avoid the generation of any real image. In this case, it is necessary to find a region in which the focal distances of the two lenses overlap. In one example, slit diaphragms can be located very close to the lenses. In particular, a slit diaphragms system can be positioned between the two lenses, and specifically directly after the lens producing the greater image magnification (i.e. the vertical direction).

In an additional embodiment, the geometry of the slit diaphragms can be adjustable relative to the optical axis of the image reproducing optic. In order to realize a local filtering, i.e. a separated Fourier filtering, for each of the vertical and horizontal plane, the slit diaphragms can be adjusted in an asymmetric configuration. In this way, there is an improvement in the display of the edges and textures of the objects to be inspected.

In one embodiment, the sensor of the recording means is a two-dimensional sensor device, in particular a Cartesian sensor, wich a plurality of sensor cells or pixels organized on a planar surface into a Cartesian arrangement. The sensor preferably has a square-shaped pattern. However, it can alternatively have a rectangular-shaped pattern or a circular pattern or any other pattern able to correctly reproduce the image of the object in the vertical and horizontal directions. The geometrical distortion caused by the image reproducing optic results in an improved image field on the sensor. In other words, the magnification in one of the image directions has an effect that the area of the image surface on the sensor is exploited in a more efficient way, with a resulting enhancement of the geometrical resolution of the image.

In a further additional embodiment, the optical device comprises a second inspection means being coupled to, and in the same viewing direction of, the first inspection means comprising a second recording means for recording images of the object on a second sensor from an oblique direction with respect to the plane of the supporting means and a second image reproducing optic for reproducing the image of the object on the sensor of the second recording means. In particular, the second image reproducing optic is configured to follow the Scheimpflug principle in order to maintain the sharpness in the z-direction.

As stated above, to follow the Scheimpflug principle the plane defined by the sensor of the second recording means and the plane defined by the lens positioned between the sensor and the inspected object are oriented such that these planes meet the plane of the object at a single point in the space.

The second recording means can be a CCD or a CMOS camera with an optical axis forming a fixed angle of elevation with respect to the plane of the supporting means. This angle can be the same angle of elevation as the first recording means cr any angle between 0 and 90 degrees, preferably between 5 and 35 degrees and more preferably between 10 and 20 degrees. In case the elevation angle is the same for both the first and the second recording means, a beam splitter or a semi-transparent mirror is necessary in the viewing direction. Alternatively, the second recording means can be located over the first recoding means with an angle of elevation of about 10 degrees greater than the angle of elevation of the first recording means, i.e. preferably between 20 and 30 degrees with respect to the plane defined by the supporting means.

The combination of two coupled inspection means, one for producing a geometrical distortion of the image in the vertical direction and the other for maintaining the sharpness in the viewing direction, guarantees that the object to be inspected and measured in the vertical direction can exactly be lccalized in the plane XZ parallel to the viewing direction.

In one embodiment, the second image reproducing optic comprises a four focal lengths long optical system (4f-optical system) for producing a spectral filtering. This optical system is made of two convergent lenses, wherein the first lens performs the Fourier transform of the input object in its image focal plane, where a specific filter is positioned and the second convergent lens performs the inverse Fourier transform in the output plane of the system to get the filtered image of the object. In order to obtain an exact scaling of the dimensions of the object in the viewing direction, this optical system is configured to be telecentric.

In order to combine the measurements performed on the two sequences of images recorded by the first and the second recording means, respectively, the computing unit comprises a combining means. Said combining means advantageously combines the information related to the height dimensions of the object, obtained from the scaled image in the vertical direction in high resolution, with the information related to the exact location of the object section in the viewing direction, obtained from the images with improved sharpness captured by the second inspection means following the Scheimpflug principle. In this way, the two information data can be merged together to achieve a more precise and reliable measure of the dimensions of the inspected object.

In a further embodiment, the optical device comprises a plurality of illuminating means for illuminating the object from different positions. In particular, the illuminating means can be positioned sideways, frontal and/or perpendicular relative to the object or in any other position useful for the measurements. In addition, in case the supporting means and eventually the object to be inspected are transparent, an illuminating means can also be positioned under said supporting means. Due to the shadow effect, it is possible to generate a selected local direction of arrival of the light on the object that can be defined by the relative distances of the illuminating means. In this way, by analyzing images captured under different illumination conditions, more information can be achieved regarding different points of the object, thereby resulting in a nore precise measurement of the dimensions of said object.

In an additional embodiment, the computing unit comprises a controlling means for controlling and regulating the illumination of the illuminating means. In this way, the illuminating means can be activated/deactivated cr their illumination intensity can be varied, as necessary. The activation/deactivation as well as the light intensity variation can be performed according to a predetermined of single or combined illuminating means. Of course, the controlling means can also control and regulated the first and/or the second recording means as well as the first and/or the second image reproducing means. Said controlling or regulation can be carried out for the different means independently or in combination with each other. For example, by activating some illuminating means in particular positions, the optic of the recording means can automatically be regulated to obtain a sequence of images with an improved contrast.

In a further additional embodiment, the optical system comprises a laser device coupled to the optical elements cf the system. By means of the laser beam, it is possible to project on the inspected object marking and reference points in order to further improve the accuracy of the measurements.

According to said optical device, the computing unit ccllects of images and analyzes them. Based on this analysis, the computing unit controls the illuminating means as well as the inspection means to optimize the image quality. For example, the light intensity can be regulated or the optic can be slightly modified in order to improve the contrast and/or the focus of the recorded image. When the images are correctly on focus and the contrast is regulated to be optimal, the sequence of recorded images are processed using a dedicated evaluation software in order to measure the dimensions of the object. The computing unit can compensate possible image distortions in order to obtain absclute measured values of the object dimensions regarding, in particular, the height, the width, the base diameter, any type of flat surfaces, the form, the curvature and/or the slope of the object flanks, etc.. The calculated values of the dimensions of the objects as well as a three-dimensional representation of the object itself are then visualized on a display means of the computing unit at user's disposal. Also, the computing unit comprises a user interface in the form of tuners, buttons, switches or of a keyboard for allowing a user to interact with the elements of the optical device, e. g. to control the light intensity, the angle of elevation θ, etc..

Advantageously, the optical device can be designed to be a portable and manageable device. In such a configuration, the different optical elements, such as the illuminating means, the inspection means, the supporting means and the computing unit can be integrated in one single piece or as a combination of different parts connectable in a modular way.

In a further embodiment, the portable optical device can be designed without the supporting means. This is extremely useful for meastring, for example, the dimensions of microscopic objects protruding from a wide surface as a wall for example, from which it is impossible to take a sample able tc fit the dimensions of the supporting means. In this case, the optical device, comprising one or more illuminating means, one or more inspection means and the computing unit, is directly used on said wide surface, which thus coincides with the reference plane XZ. Of curse, in order to obtain reliable measurements, the surface on which the objects to be measured are present is preferably planar and additional reference points are necessary in order to locate the optical device in a correct way relative to the objects.

Further to the above described optical device, a method is provided for measuring the dimensions of at least a three-dimensional object. This method comprises the steps of positioning the object on a supporting means, which defines a plane, illuminating the object through at least an illuminating means, recording a sequence of images of the illuminated object through a first recording means, analyzing the recorded images and measuring the dimensions of the object. In particular, the method is characterized by producing a geometrical distortion of the image through a first image reproducing optic such that the resulting ratio height-to-width of the image is increased.

In this way, it is possible to reliably determine the dimensions of objects having a very small height with respect to the base dimensions.

In one embodiment, the method further comprises the steps of recording a sequence of additional images of the object through a second recording means with a second image reproducing optic configured to follow the Scheimpflug principle, analyzing the additional recorded images and measuring the dimensions of the object by combining the two sequences of recorded images.

By ccnsidering both the sequence of images taken from the first and the second recording means, the advantage of achieving information on the vertical dimensions of the object with an improved resolution is well combined with the advantage of obtaining exact information regarding the location of the object on the plane in the viewing direction. Thus, the measurement accuracy is efficiently improved.

In an additional embodiment, the method comprises the steps of illuminating the object with a plurality of illuminating means and sequentially activating said illuminating means. In particular, the illuminating means can be activated individually or in combination with each other using a controlling means. Successively or simultaneously illuminating the object from different viewpoints serves for making the single characteristics of the object visible with high contrast and measurable. By virtue of the shadow effect, it is possible, by recording a sequence of images under different illumination conditions, obtain information regarding the dimensions of objects having particular structures. For example, positioning an illuminating means perpendicular to the plane cf the supporting means is useful for objects having a planar top surface. Similarly, grcuping the illuminating means in determined areas of the illuminating space can be useful for objects having, for example, asymmetric structures. Here, with the expression "different illumination conditians" is intended illuminating the object from different positions and/or illuminating the object with a different (increased or decreased) light intensity.

In a further embodiment, the method comprises the step of iterative adjusting the illuminating conditions based on the performed measurements. In this way, if there are for example problems with the cortrast or the resolution of the images, the illumination can automatically be regulated accordingly. In other words, the light intensity can be increased cr decreased and/or a single or a group of illuminating means can be activated or deactivated. This can be carried cut by means of an iterative process based on previous measurements until the best results are achieved.

The illuminating conditions can also be modified based on the different recording means used to capture the sequence of images. In fact, due to the different optic used for the first and the second inspection means, it could be necessary Lo adapt the illuminating conditions accordingly in order to optimize the measurement performance. However, it is also possible to find an illuminating condition that can equally be efficient for the measurements performed by the first and the second recording means.

In a further additional embodiment, the sequential recording of the images can be regulated in an iterative process based on previous measured images. This can be extremely useful when the structure and the dimensions of the inspected object arc completely unknown. By virtue of this process, it is possible, starting from known images, to approach the real and exact dimensions of the object in an iterative way. Based on different illuminating conditions, it is possible, for example, to obtain additional information regarding the objects structure from the different directions and lengths of the shadows. Furthermore, a sequential recording of the images can be optimizcd by means of an iteration of the light intensity. In this way, a sequence of parameters and/or illuminating conditions can be stored and employed successively for the measurement of objects with completely unknown dimensions and structures in an adaptive way.

A preferred embodiment of an optical device in accordance with the invention will be explained herein below in greater detail with reference to the accompanying drawings, in which:
- Fig. 1: shows a schematic representation of the optical device in accordance with different embodiments of the present disclosure;
- Fig. 2a and Fig. 2b: show the effect of the geometrical distortion in the vertical direction on the sensor array in accordance with the present disclosure;
- Fig. 3: shows the effect of two cylindrical lenses in accordance with one embodiment of the present disclosure; and
- Fig. 4: shows a schematic representation of the computing unit and the corresponding components in accordance with the present disclosure.

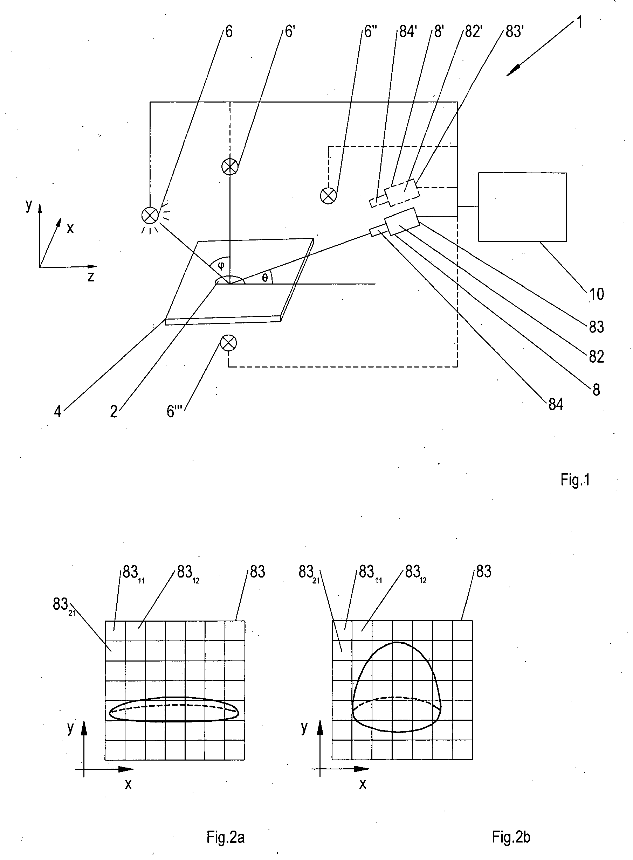

Figure 1 describes a representation of an optical device 1 for measuring the dimensions of at least an object 2. The object 2 is a microscopic lens-shaped structure having a base diameter of one order of magnitude greater than the dimension of the height and being arranged on a supporting means 4 or a plate. The object 2 is illuminated by an illuminating means 6 and is inspected by an inspection means 8 positioned sideways relative to the object 2 at a fixed angle of elevation. In particular, the illuminating means 6 radiates in a direction of the space towards the object 2, forming an angle ϕ relative to the axis perpendicular to the object 2 and the inspection means 8 forms an angle θ with respect to the plane defined by the supporting means 4. The position and orientation of the elements of the optical device 1 are specified with reference to a coordinate system XYZ, with the Y-axis in the direction of the height of the object 2, the Z-axis in the direction of the optical axis of the inspection means 8, thereby defining a viewing direction, the plane XZ parallel to the plane defined by the supporting means 4, and the plane YX perpendicular to the viewing direction. The inspection means 8 comprises a recording means 82 or CCD camera having a sensor 83, specifically a square-shaped Cartesian sensor, and an image reproducing optic 34 for producing the image of the object 2 on the plane of the sensor 83. Both the illuminating means 6 and the inspection means 8 are connected with a cable to a computing unit 10. Alternatively, the connection between these elements can be carried out without cables (e. g. via a wireless network, bluetooth, or the like).

A sequence of images of the object 2, illuminated by the illuminating means 6, is recorded by the CCC camera 82 and transmitted to the computing unit 10. The computing unit 10 collects said images and analyzes them. Based on this analysis, the computing unit 10 controls the illuminating means 6 as well as the inspection means 8 to optimize the image quality. The sequence of recorded images is then processed and the calculated values of the dimensions of the objects as well as a three-dimensional representation of the object itself are visualized on a display (not shown in the figure).

Figure 2 describes the effect of the image reproducing optic 84 can the image of the object 2 in the plane of the sensor 83. The sensor 83 comprises a two-dimensional array of pixels 83₁₁, 83₁₂, 83_{21,} ...83ₙₙ arranged into rows and columns defining a plane parallel to the XY plane. As stated above, the vertical dimension of the inspected object 2 is much smaller compared to the base dimensions. Accordingly, the number of pixel sensors 83₁₁, 83₁₂, 83₂₁, ...83ₙₙ used in the Y direction is considerably smaller in comparison with those in the X direction (Figure 2a). However, by virtue of the image reproducing optic 84, the ratio of the dimensions X and Y is modified such that the image field of the object 2, i.e. the area of the image surface, is efficiently filled also in the Y direction (Figure 2b). In other words, the the ratio Y/X of the image increases.

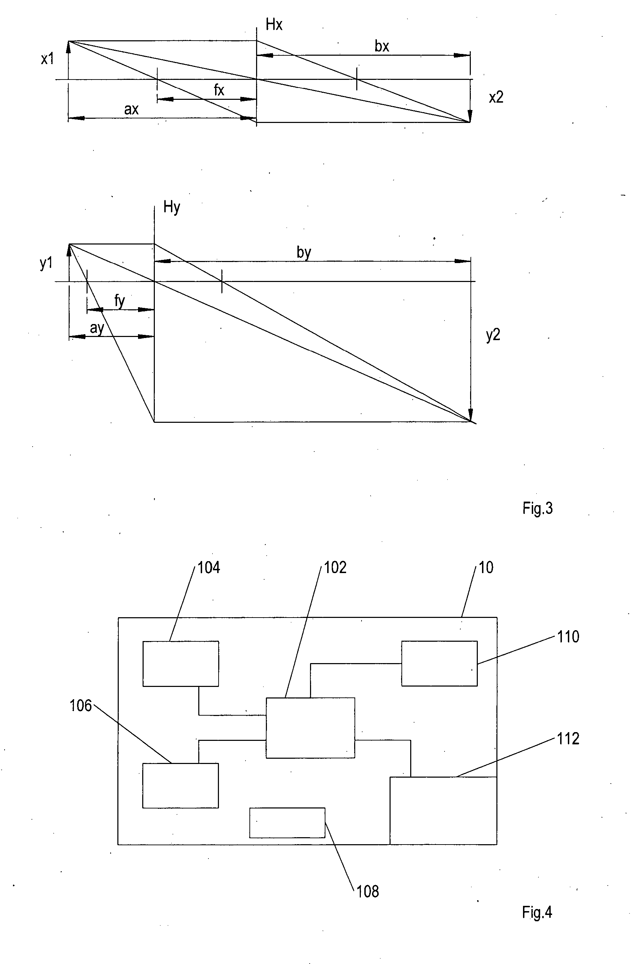

According to the figure 3, the above described geometrical distortion is realized by means of an optical system comprising two cylindrical lenses Ex and Hy having the corresponding optical axes in the vertical and horizontal direction crossing each other. Here, the horizontal (x₁) and the vertical (y₁) dimensions of the inspected object 2 are modified in a different way. Whereas the horizontal dimension remains almost the same, the vertical dimension is considerably magnified. This is due to the particular lenses used and their different positions relative to the object 2. However, the optical system is configured in such a way that, although the distances of the lenses (ax and ay) from the object 2 are different, the image plane of the object 2 for both the directions X and Y results to be the same.

Coming back to figure 1, additional embodiments of the optical device 1 are described with dashed lines. An additional inspection means 8' is positioned in the same viewing direction of the inspection means 8 and is connected via a cable to the computing unit 10. The additional inspection means 8' comprises a recording means 82' having a sensor 83' and an image reproducing optic 84' for producing the image of the object 2 on the plane of the sensor 83'. The image reproducing optic 84' of the additional inspection means 8' is configured to follow the Scheimpflung principle in order to maintain the sharpness in the Z direction. The computing unit 10 analyzes the sequences of images taken from the two different inspection means 8, 8' and combines them in order to improve the measurement accuracy. Furthermore, additional illuminating means 6', 6", 6" are positionable perpendicular to the object 2, above or below the supporting means (6', 6'''), or sideways relative to the object 2 in a symmetrical position (6'') with respect to the illuminating means 6. All the additional illuminating means are connected to the computing unit 1C, that can control their activation/deactivation or their light intensity according to a predetermined sequence.

It can be noted that the optical system can be configured to have only one inspection means 8 and a single illuminating means 6, or two inspection means 8, 8' and a single illuminating means 6, or one inspection means 8 and a plurality of illuminating means 6, 6', 6'', 6"', or two inspection means 8, 8" and a plurality of illuminating means 6, 6', 6'', 6'''.

Finally, according to figure 4, the computing unit 10 comprises a central processing means 102 for analyzing and processing the images as well as for controlling the other elements of the computing unit 10. Furthermore, connected to the processing means 102, the computing unit 10 comprises a controlling unit 104 for controlling the illuminating means 6, 6', 6'' 6"', the image reproducing optic 84, 84' and/or the recording means 32, 82', a combining means 106 for combining the sequence of images taken from the two different inspection means 8, 8', a power supply 108, for powering the computing unit 10 and the other electrical components of the optical device 10, a storing means 110 for collecting the image data, and a display/user interface 112 for displaying the resulting images and the corresponding measurements data to a user.

Whilst features have been presented in combination of the above description, this is intended solely as an advantageous combination. The above description is not intended to show required combinations of features, rather it represents each of the aspects of the disclosure. Accordingly, it is not intended that any described specific combination of features is necessary for the functioning of the optical device 1 and/or the corresponding method.

### List of reference numerals

- 1: optical device
- 2: inspected object
- 4: supporting plane
- 6: illuminating means
- 6', 6'', 6''': additional illuminating means
- 8: first inspection means
- 8': second inspection means
- 10: computing unit
- 82: first recording means
- 82': second recording means
- 83: first sensor
- 83₁₁, 83₁₂, 83₂₁, ...83ₙₙ: pixel sensors
- 83': second sensor
- 84: first image reproducing optic
- 84': second image reproducing optic
- 102: processing means
- 104: controlling means
- 106: combining means
- 108: power supply
- 110: storing means
- 112: display/user interface

## Claims

1. An optical device (1) for measuring the dimensions of at least a three-dimensional object (2), which has a planar base extending in the x-z plane and the height expending in the y direction, the device comprising:
- a supporting means (4), on which the object (2) is positioned, defining a surface in the x-z plane;
- at least an illuminating means (6) for illuminating the object (2);
- a first inspection means (8) comprising a first recording means (82) for recording images of the object (2) on a first sensor (83) from an oblique direction at a prescribed angle of elevation with respect to the plane of the supporting means (4); and
- a computing unit (10) fcr collecting, processing and displaying the images of the object (2);
**characterized in that**
- the first inspection means (8) comprises a first image reproducing optic (84) for producing a geometrical distortion of the image, such that the resulting ratio height-to width of the image is increased.

2. The device of claim 1, wherein the first image reproducing optic (84) comprises at least two lenses, wherein at least cne of the lenses possesses two different focal distances.

3. The device of claim 2, wherein one of the two lenses is a cylindrical lens.

4. The device of one of claims 2 or 3, wherein the first image reproducing optic (84) further comprises at least two different slit diaphragms for each of the two focal distances.

5. The device of claim 1, wherein the first sensor (83) is a two-dimensional sensor device with a plurality of sensor cells organized on a planar surface into a Cartesian arrangement.

6. The device of one of the preceding claims, further comprising:
a second inspection, means (8') being coupled to, and in the same viewing direction of, the first inspection means (8) comprising a second recording means (82') for recording images of the object (2) on a second sensor (83') from an oblique direction with respect to the plane of the supporting means (4) and a second image reproducing optic (84') for reproducing the image of the object (2) on the sensor (83') of the second recording means (82';, wherein the second image reproducing optic (84') is configured to follow the Scheimpflug principle in order to maintain the sharpness in the z-direction.

7. The device of claim 6, wherein the second image reproducing optic (84') comprises a 4-f system and is telecentric.

8. The device of one of claims 6 or 7, wherein the computing unit (10) further comprises a combining means (106) for combining the measurements performed on images recorded by the first and the second recording means (82, 82').

9. The device of one of the preceding claims further comprising a plurality of illuminating means (6, 6', 6", 6"') for illuminating the object (2) from different positions.

10. The device of one of the preceding claims, wherein the computing unit (10) comprises a controlling means (104) for controlling the illuminating means (6, 6', 6", 6"'), the recording means (82, 82') and/or the image reproducing optic (84, 84').

11. A method for measuring the dimensions of at least a three-dimensional object 12), the method comprising:
- positioning the object (2) on a supporting means (4) defining a plane;
- illuminating the object (2) by means cf at least an illuminating means (6) ;
- recording a sequence of images of the illuminated object (2) by means of a first recording means (82);
- analyzing the recorded images; and
- measuring the dimensions of the object (2),
**characterized by**
- producing a geometrical distortion of the image by means of a first image reproducing optic (84) such that the resulting ratio height-to-width of the image is increased.

12. The method of claim 11, further comprising:
- recording a sequence of additional images of the object (2) by means of a second recording means (82') with a second images reproducing optic (84') configured to follow the Scheimpflug principle;
- analyzing the additional recorded images; and
- measuring the dimensions of the object (2) by combining the two sequence of recorded images.

13. The method of claim 11 cr 12, further comprising:
illuminating the object with a plurality of illuminating means (6, 6', 6", 6''') and sequentially activating the illuminating means (6, 6', 6''), said means (6, 6', 6'') being activated individually or in combination with each other through a controlling means (104).

14. The method of one of the preceding claims, further comprising:
iterative adjusting the illuminating condition based on the performed measurements.

15. The method of one of the preceding claims, further comprising:
controlling the recording of the images by means of an iterative process based on the already analyzed images.
